# EUROPÄISCHE PATENTSCHRIFT

(11) **EP 1 718 937 B1**
(45) Veröffentlichungstag und Bekanntmachung des Hinweises auf die Patenterteilung: **13.06.2012**
(21) Anmeldenummer: 05715464.3
(22) Anmeldetag: 23.02.2005
(51) Int. Cl.: G01D 11/24

(54) **SENSORHALTER UND VERFAHREN ZU DESSEN HERSTELLUNG**
SENSOR HOLDER, AND METHOD FOR THE PRODUCTION THEREOF
SUPPORT DE CAPTEUR ET PROCEDE DE REALISATION ASSOCIE

(30) Priorität: 24.02.2004 DE 102004010321
(43) Veröffentlichungstag der Anmeldung: 08.11.2006
(73) Patentinhaber: Prettl, Rolf, 72072 Tübingen (DE)
(72) Erfinder: BORST, Peter, 88527 Unlingen (DE); BARTH, Dietmar, 72766 Reutlingen (DE)
(74) Vertreter: Steil, Christian
(86) Internationale Anmeldenummer: PCT/EP2005/001868
(87) Internationale Veröffentlichungsnummer: WO 2005/080922

(56) Entgegenhaltungen:
- EP-A- 1 359 424
- DE-A- 4 405 438
- DE-A1- 3 827 937
- DE-A1- 3 902 218
- DE-A1- 10 146 156
- DE-A1- 19 523 322
- DE-A1- 19 618 538
- DE-A1- 19 644 379
- DE-C1- 19 546 865
- DE-U1- 20 018 538
- US-A- 5 563 510

## Beschreibung

Die vorliegende Erfindung betrifft einen Sensorhalter zum Lagern eines Sensorbauteiles, insbesondere eines Hall-Sensors, mit einer länglichen Halteeinrichtung, an deren erstem axialen Ende das Sensorbauteil gelagert ist und an deren zweitem axialen Ende ein Anschlusskabel heranführbar ist, dessen Adern mit Anschlüssen des Sensorbauteiles verbindbar sind, wobei die Halteeinrichtung einen Kunststoffträger, an dem das Sensorbauteil gelagert ist, und eine den Kunststoffträger umschließende Metallhülse aufweist, die an dem ersten Ende geschlossen ist.

Ferner betrifft die vorliegende Erfindung ein Verfahren zum Herstellen einer Sensorpatrone für eine Sensoranordnung bzw. für ein Sensorbauteil.

Aus der DE 38 27 937 A1 sind ein solcher Sensorhalter und ein solches Verfahren bekannt.

Bislang wurden Sensorhalter bzw. Sensorpatronen der gattungsgemäßen Art hergestellt und aus einem sog. MIM-Bauteil (metal injection molding), eine Art Sinterteil. In dieses wurde ein Hall-Sensor (und ggf. eine Messschaltung) vergossen. Die Sensorpatrone mit dem Hall-Sensor ist bspw. in Bezug auf einen Permanentmagneten beweglich, der Teil einer Sensoranordnung ist.

Das Bauteil auf der Basis der MIM-Technologie ist jedoch nicht hinreichend toleranzhaltig. Ferner ist das Vergießen ein sehr unzulässiger Prozess, insbesondere bei den relativ geringen Abmessungen der in Frage stehenden Bauteile.

In der eingangs genannten DE 38 270 937 A1 ist ein elektrischer Messwertaufnehmer gezeigt, bei dem eine Messschaltung mit einem Sensorelement von einem Gehäuse umgeben ist. Das Gehäuse ist mit einem kappenartigen Anschlussteil versehen, welches das eine Ende eines Anschlusskabels aufnimmt. Innerhalb des Gehäuses ist die Messschaltung mit dem Anschlusskabel über ein mehradriges flexibles Leitungsstück verbunden. Leitungsstück und Sensorelement befinden sich auf einem Tragkörper, wobei das Leitungsstück und die aus dem Anschlussteil herausragenden Adern des Anschlusskabels direkt miteinander verbunden sind.

In der EP 1 359 424 A2 ist ein Drehzahlsensor gezeigt, der einen Hall-IC aufweist, der einem Detektionsziel zugewandt ist. Ein Magnet ist hinter dem Hall-IC angeordnet, um ein Magnetfeld zu erzeugen. Der Messaufbau befindet sich auf einem Substrat bzw. auf einer Platine, die in einen patronenartigen Halter geschoben wird. Der Hall-IC kommt dann am Zylinderdeckel der Patrone zu ruhen.

In der DE 196 18 538 A1 sind ein Umdrehungssensor und ein entsprechendes Herstellungsverfahren offenbart. Bei dem Sensor wird ein elektrisches Ausgangssignal einer magnetoelektrischen Umwandlungseinrichtung über ein Verbinderteil und einen Einfügungsleiter nach außen abgegeben, der in einer Basis zusammen mit dem Magneten eingesetzt und geformt ist. Ein Teil des Einfügungsleiters ist zu der Oberfläche der Basis zum Bilden eines Oberflächenanbindungs-Elektrodenteils freigelegt, und eine elektronische Komponente ist auf dem Elektrodenteil montiert. Die Basis und der Verbinderteil werden in den verschiedenen Schritten geformt.

Die DE 44 05 438 A1 zeigt einen Drehzahlgeber zur berührungslosen Abtastung eines drehbaren Bauteils, bei dem ein ortsfester Sensor, der mit einer Sensoroberfläche dem drehbaren Bauteil benachbart in einem topfförmigen Gehäuse angeordnet ist, mittels eines federnden Elements unter Vorspannung an eine Innenfläche des Gehäuses angedrückt ist. Der Hall-Sensor wird in eine Vergussmasse eingesetzt, die anschließend erkaltet und erstarrt.

Aus der DE 196 44 379 A1 ist eine Einrichtung zur Lagefixierung eines Spulenträgers in einem topfförmig ausgebildeten Gehäuseteil gezeigt. Dabei weist das topfförmige Gehäuseteil ein Verschlussteil auf, welches auf der dem Boden des topfförmigen Gehäuseteils abgewandten Seite des Spulenträgers angeordnet ist. Am Verschlussteil stützen sich ein Polstift und ein Spulenträger ab.

Vor dem obigen Hintergrund besteht das der Erfindung zugrunde liegende technische Problem darin, einen verbesserten Sensorhalter bzw. ein verbessertes Verfahren zu dessen Herstellung anzugeben, und zwar verbessert insbesondere im Hinblick auf Qualität, Kosten und/oder Zuverlässigkeit.

Diese Aufgabe wird durch einen Sensorhalter gemäß Anspruch 1 und durch ein Verfahren gemäß Anspruch 16 gelöst.

In der Regel ist die Metallhülse bzw. der metallische Außenträger aus einem nicht- bzw. amagnetischen Material hergestellt, insbesondere aus einem nicht- bzw. amagnetischen Metall, insbesondere aus Edelstahl.

Der Begriff des Anschlusskabels mit Adern ist im vorliegenden Fall breit zu verstehen. Beispielsweise können an den Sensorhalter auch einzelne elektrische Leitungen herangeführt werden, die im Sprachgebrauch der vorliegenden Anmeldung ein Anschlusskabel bilden. Die Verbindung zwischen den Adern des Anschlusskabels und den Anschlüssen des Sensorbauteils kann direkt erfolgen, kann jedoch auch über weitere Verbindungselemente erfolgen, beispielsweise über eine Messschaltungsplatine, über eine elektrische Steckerverbindung, etc.

Bei der Erfindung ist es besonders vorteilhaft, dass der Hall-Sensor in einem Verbundbauteil aus Kunststoffträger und metallischen Außenträger aufgenommen ist, das kostengünstig und mit hoher Zuverlässigkeit herstellbar ist. Insbesondere ist ein Vergießen des Hall-Sensors nicht mehr notwendig. Der Außenträger kann beispielsweise aus Metallblech oder einem Metallstück hergestellt sein, so dass eine hinreichende Toleranzhaltigkeit erzielbar ist.

Gemäß der vorliegenden Erfindung ist der eingangs genannte Sensorhalter dadurch gebildet, dass das Sensorbauteil in axialer Richtung schwimmend an dem Kunststoffträger gelagert ist.

Hierdurch ist es möglich, das Sensorbauteil relativ zu dem Kunststoffträger zu versetzen. Insbesondere ist es möglich, das Sensorbauteil in eine definierte Lage in Bezug auf einen metallischen Außenträger anzuordnen, so dass Abmessungs- oder Montagetoleranzen ausgeglichen werden können.

Auch hierdurch wird die Toleranzhaltigkeit positiv beeinflusst.

Bei einem weiteren Aspekt der vorliegenden Erfindung ist der eingangs genannte Sensorhalter dadurch weitergebildet, dass der Kunststoffträger an dem ersten Ende eine Öffnung aufweist, gegenüber der eine Sensorfläche des Sensorbauteiles axial vorsteht.

Hierdurch ist es möglich, das in dem Kunststoffträger gelagerte Sensorbauteil mit seiner Sensorfläche unmittelbar an einer metallischen Bezugsfläche, beispielsweise des metallischen Außenträgers, anzuordnen.

Auch hierdurch kann eine Sensorpatrone mit hoher Toleranzhaltigkeit, insbesondere auch hinsichtlich der elektrischen Eigenschaften, realisiert werden.

Bei einem weiteren Aspekt der vorliegenden Erfindung ist der eingangs genannte Sensorhalter dadurch weitergebildet, dass wenigstens ein Anschlussstift des Sensorbauteiles mit einem Stifthalter aus Kunststoff umspritzt ist.

Vorzugsweise sind mehrere, insbesondere sämtliche Anschlussstifte des Sensorbauteils mit dem Stifthalter umspritzt.

Der Stifthalter kann dabei eine Mehrzahl von Funktionen ausüben. Beispielsweise kann hierdurch eine Zugentlastung bereitgestellt werden. Auch kann die Kontaktierung mit Adern des Anschlusskabels erleichtert werden.

Gemäß einem weiteren Aspekt der vorliegenden Erfindung ist zur elektrischen Verbindung zwischen dem Sensorbauteil und einer Messschaltung eine flexible flache Verbindungseinrichtung vorgesehen.

Hierdurch ist es vergleichsweise einfach, das Sensorbauteil in axialer Richtung schwimmend an dem Kunststoffträger zu lagern. Auch lässt sich eine solche flexible Verbindungseinrichtung leicht in dem Kunststoffträger integrieren.

Die flache flexible Verbindungseinrichtung kann beispielsweise als Flexfolie bzw. Starflex-Verbindung ausgeführt sein. Ferner kann das Sensorbauteil bei dieser Ausführungsform in bevorzugter Weise als SMD-Bauteil ausgeführt sein, das direkt auf die flache Verbindungseinrichtung kontaktiert ist.

Schließlich wird die obige Aufgabe gelöst durch ein Verfahren zum Herstellen einer Sensorpatrone gemäß Anspruch 16.

Mit dem erfindungsgemäßen Verfahren kann ein Sensorhalter bzw. eine Sensorpatrone kostengünstig mit hoher Toleranzhaltigkeit und so mit hoher gleichbleibender Qualität hergestellt werden.

Gemäß der vorliegenden Erfindung ist es besonders bevorzugt, wenn die Metallhülse an dem ersten Ende geschlossen ist.

Hierdurch kann eine definierte axiale Relativlage zwischen Kunststoffträger bzw. Sensorbauteil und der Metallhülse erzielt werden.

Ferner ist es hierbei vorteilhaft, wenn die Metallhülse mit einer Bördelung versehen ist, um den Kunststoffträger an der Metallhülse festzulegen.

Hierdurch kann die Metallhülse durch ein einfaches Fertigungsverfahren an dem Kunststoffträger festgelegt werden.

Dabei ist es von besonderem Vorzug, wenn die Bördelung den Kunststoffträger axial in Richtung hin zu dem ersten Ende presst.

Hierdurch wird erreicht, dass das an dem ersten Ende gelagerte Sensorbauteil in Richtung hin zu dem vorzugsweise geschlossenen Ende der Metallhülse pressbar ist, um so eine definierte Relativlage zu erzielen. Es versteht sich, dass die Bördelung dabei vorzugsweise an dem zweiten Ende ausgebildet ist.

Ferner ist es vorteilhaft, wenn das Anschlusskabel im Bereich des zweiten Endes von einem Dichtungsring umschlossen ist.

Hierdurch kann das Sensorbauteil im Inneren der Metallhülse hermetisch abgeschlossen werden.

Bei einer bevorzugten Ausführungsform ist das Anschlusskabel am zweiten Ende des metallischen Außenträgers umspritzt.

Durch eine solche Umspritzung, beispielsweise in Form einer Makromeltumspritzung, wird zum einen eine notwendige Abdichtung im Bereich des zweiten Endes erzielt. Zum anderen kann eine solche Umspritzung auch eine gute Zugentlastung in Bezug auf das Anschlusskabel bereitstellen.

Es versteht sich, dass im Falle einer Umspritzung in der Regel auf einen separaten Dichtungsring verzichtet werden kann.

Die Umspritzung, in der Regel ein Kunststoffmaterial, kann dabei direkt an dem metallischen Außenträger und dem Kunststoffträger angreifen und das Anschlusskabel umschließen.

Gemäß einer weiteren bevorzugten Ausführungsform des ersten Aspektes der vorliegenden Erfindung weist der Kunststoffträger ein Unterteil und einen Deckel auf, die durch eine etwa axial verlaufende Trennebene voneinander getrennt sind.

Dies ermöglicht es auf konstruktiv günstige Weise, das Sensorbauteil an dem Kunststoffträger zu lagern, insbesondere, indem das Sensorbauteil zwischen Unterteil und Deckel aufgenommen wird.

Ferner ist es vorteilhaft, wenn an dem Kunststoffträger ein erster Radialsteg zur Zugentlastung ausgebildet ist.

Dies ermöglicht es, das Sensorbauteil und/oder das Anschlusskabel unter Zugentlastung anzuschließen.

Gemäß der Erfindung ist das Sensorbauteil in axialer Richtung schwimmend an dem Kunststoffträger gelagert ist.

Dazu sind elastische Mittel vorgesehen, um das Sensorbauteil in axialer Richtung hin zu dem ersten Ende vorzuspannen.

Durch diese Maßnahme wird erreicht, dass das Sensorbauteil in eine definierte Lage vorgespannt werden kann.

Hierbei ist es ferner vorteilhaft, wenn die elastischen Mittel durch ein Silikonkissen gebildet sind.

Alternativ können die elastischen Mittel jedoch auch durch andere Maßnahmen vorgesehen werden, beispielsweise durch eine Kunststofffeder oder Ähnliches.

Vorzugsweise sind die elastischen Mittel jedoch aus einem nicht-magnetischen Material hergestellt.

Gemäß der Erfindung stützen, die elastischen Mittel sich in axialer Richtung an einem Radialsteg des Kunststoffträgers.

Bei einer weiteren bevorzugten Ausführungsform weist der Kunststoffträger an dem ersten Ende eine Öffnung auf, gegenüber der eine Sensorfläche des Sensorbauteils axial vorsteht.

Hierdurch ist es möglich, die Sensorfläche in unmittelbarer Anlage beispielsweise an einen Bodenbereich des metallischen Außenträgers zu bringen, um so insgesamt die magnetischen Eigenschaften zu verbessern, insbesondere die Toleranzhaltigkeit der magnetischen Eigenschaften.

Dabei ist es generell möglich, die Sensorfläche an den Bodenbereich des metallischen Außenträgers zu drücken durch eine entsprechende Vorspannung des Kunststoffträgers in Bezug auf den metallischen Außenträger.

Besonders bevorzugt ist es jedoch, wenn die Sensorfläche an den Bodenbereich des metallischen Außenträgers geklebt wird. Hierdurch wird eine hohe Sicherheit gegenüber Vibrationen erzielt. Ferner kann ein Temperaturdrift mit der Zeit vermieden werden.

Gemäß einer weiteren bevorzugten Ausführungsform weisen die Anschlussstifte des Sensorbauteils einen axialen Abschnitt und einen radialen Abschnitt auf, wobei die Anschlussstifte von dem Sensorbauteil aus gesehen hinter dem radialen Abschnitt an der Halteeinrichtung festgelegt sind.

Durch das Bereitstellen einer Kombination aus einem axialen Abschnitt und einem radialen Abschnitt ist es auf konstruktiv einfache Weise möglich, das Sensorbauteil axial schwimmend bzw. beweglich zu lagern, wobei Axialbewegungen durch Auslenkungen des radialen Abschnitts aufgenommen werden.

Bei dem Sensorhalter gemäß einem weiteren Aspekt der vorliegenden Erfindung ist es von besonderem Vorzug, wenn der Stifthalter wenigstens eine Ausnehmung aufweist, in der wenigstens ein Anschlussstift freigelegt ist.

Hierdurch ist es möglich, den mittels des Stifthalters fixierten Anschlussstift elektrisch zu kontaktieren.

Besonders bevorzugt ist es dabei, wenn in die Ausnehmung ein elektrisches Bauteil eingesetzt ist, das den Anschlussstift kontaktiert.

Hierbei dient der Stifthalter gleichzeitig als Träger bzw. Aufnahme für ein elektrisches Bauteil, das als Teil einer Messschaltung bzw. zur Beschaltung des Sensorbauteils vorgesehen ist.

Es versteht sich dabei, dass in dem Stifthalter vorzugsweise wenigstens eine Ausnehmung vorgesehen ist, die zwei separate Anschlussstifte freilegt, um so ein Bauteil einsetzen zu können, das beide Anschlussstifte kontaktiert.

Ferner ist es bei dem Sensorhalter gemäß einem weiteren Aspekt der Erfindung vorteilhaft, wenn Enden der Anschlussstifte gegenüber dem Stifthalter vorstehen und mit den Adern des Anschlusskabels elektrisch verbindbar sind.

Dies ermöglicht, die Enden der Anschlussstifte um eine vorausgewählte, für die elektrische Verbindung ideale Distanz gegenüber dem Stifthalter vorstehen zu lassen.

Ferner ist es hierbei vorteilhaft, wenn der Stifthalter eine Vertiefung aufweist, in die ein Radialsteg der Halteeinrichtung, insbesondere des Kunststoffträgers, greift, um eine Zugentlastung bereitzustellen.

Auch ist es vorteilhaft, wenn die Halteeinrichtung einen weiteren Radialsteg mit Öffnungen aufweist, durch die Enden der Anschlussstifte hindurchgeführt sind, die gegenüber dem Stifthalter vorstehen.

Dies ermöglicht einerseits eine günstige Kontaktierung der Anschlussstifte, und zwar an den Enden, die gegenüber dem Stifthalter und den Öffnungen hervorstehen. Ferner wird auf konstruktiv günstige Weise eine Zugentlastung bereitgestellt, indem sich der Stifthalter an dem weiteren Radialsteg abstützen kann.

Bei einer weiteren insgesamt bevorzugten Ausführungsform ist das Anschlusskabel mit einem Steckverbinder verbunden und der Kunststoffträger weist eine Steckverbinderaufnahme zum Einführen des Steckverbinders auf.

Hierdurch kann das Verfahren zum indirekten Verbinden der Adern der Anschlussleitung mit der Messschaltung bzw. dem Sensorbauteil erleichtert werden. Der Steckverbinder kann anschließend in der Steckverbinderaufnahme umspritzt werden.

Von besonderem Vorteil ist es dabei, wenn der Kunststoffträger einen Ansatz aufweist, der sich an dem zweiten Ende aus dem metallischen Außenträger heraus erstreckt.

Hierdurch können für die eigentliche Sensorpatrone, also den von dem metallischen Außenträger umschlossenen Teil des Sensorhalters kompakte Abmessungen beibehalten werden. Der Ansatz hingegen kann so gestaltet werden, dass er auch einen vergleichsweisen großen Steckverbinder aufnehmen kann.

Dabei versteht sich, dass der Steckverbinder vorzugsweise rastend in der Steckverbinderaufnahme aufgenommen werden kann, um eine Zugentlastung bereitzustellen, und vorzugsweise in der Steckverbinderaufnahme umspritzt werden kann, um die notwendige Abdichtung bereitzustellen. Ferner kann hierbei die rastende Verbindung fixiert werden, um so die Zugentlastung dauerhaft bereitzustellen.

Obgleich bei einer oben dargestellten Ausführungsform das Sensorbauteil mit Anschlussstiften versehen ist, an die Adern des Anschlusskabels auch unmittelbar kontaktiert werden können, ist das Sensorbauteil gemäß einer bevorzugten alternativen Ausführungsform als SMD-Bauteil ausgebildet.

Hierbei kann das SMD-Bauteil vor dem Einsetzen in den Kunststoffträger an einem Leiterplattenträger vormontiert werden, so dass die Fabrikation insgesamt vereinfacht ist.

Diese Ausführungsform ist besonders günstig, da eine flexible flache Verbindungseinrichtung dazu genutzt werden kann, um ein SMD-Bauteil direkt hierauf zu kontaktieren.

Ferner ist es vorteilhaft, wenn an dem Kunststoffträger eine Leiterplatte gelagert ist, an der zumindest ein Teil einer Messschaltung implementiert ist.

Diese Ausführungsform ist insbesondere bei Verwendung der flexiblen flachen Verbindungseinrichtung vorteilhaft, die in diesem Fall mit der Leiterplatte verbunden ist.

In manchen Fällen kann die flexible Verbindungseinrichtung auch direkt als Leiterplatte ausgebildet sein, so dass wenigstens ein Teil der Messschaltung direkt an der flexiblen flachen Verbindungseinrichtung ausgebildet ist.

Bei dem erfindungsgemäßen Verfahren ist es vorteilhaft, wenn Anschlussstifte des Sensorbauteils vor dem Schritt b) mit einem Stifthalter aus Kunststoff umspritzt werden.

Dieser Schritt ermöglicht es, die verschiedenen Funktionen des Stifthalters zu realisieren.

Hierbei ist es auch vorteilhaft, wenn der Stifthalter wenigstens eine Ausnehmung aufweist, in der wenigstens ein Anschlussstift freigelegt ist, und wenn ein elektrisches Bauteil, insbesondere ein SMD-Bauteil, in die Ausnehmung eingesetzt und elektrisch mit dem Anschlussstift verbunden wird.

Bei dem erfindungsgemäßen Verfahren ist es alternativerweise vorteilhaft, wenn das Sensorbauteil mittels einer flachen flexiblen Verbindungseinrichtung mit einer Messschaltung im Inneren des Kunststoffträgers verbunden wird.

Ein weiterer Komplex betrifft die Kombination eines Sensorbauteils, das Anschlussstifte aufweist, mit einer Leiterplatte, an der elektronische Bauelemente zur Beschaltung des Sensorbauteils vorgesehen sind.

Bei diesem weiteren Aspekt ist vorgesehen, dass die Leiterplatte bzw..-platine senkrecht zur Axialrichtung, d.h. etwa parallel mit dem Sensorbauteil ausgerichtet wird. Die Verbindung erfolgt, indem die Anschlussstifte des Sensorbauteils zu der Leiterplatte hin abgebogen werden.

Hierbei ist es von besonderem Vorteil, wenn an einer Seitenkante der Leiterplatte metallisch beschichtete Vertiefungen vorgesehen sind, in die hinein die Anschlussstifte kontaktiert werden können.

Derartige Vertiefungen lassen sich besonders vorteilhaft herstellen, indem eine Grundleiterplatte mit beispielsweise kreisförmigen Durchkontaktierungen versehen wird, in an sich bekannter Weise, und wenn anschließend die Grundleiterplatte in zwei einzelne Leiterplatten aufgeteilt wird, indem ein Schnitt durch die Durchkontaktierungen hindurch gelegt wird. Hierdurch werden die Durchkontaktierungen "geöffnet", um so auf einfache Weise eine Verbindung zwischen den Anschlussstiften und der Leiterplatte herstellen zu können.

Ausführungsbeispiele der Erfindung sind in der Zeichnung dargestellt und werden in der nachfolgenden Beschreibung näher erläutert. Es zeigen:
- Fig. 1: eine Längsschnittansicht durch eine erste Ausführungsform einer Sensorpatrone gemäß der vorliegenden Erfindung;
- Fig. 2: eine perspektivische Darstellung der Sensorpatrone der Fig. 1 ;
- Fig. 3: eine Explosionsansicht der Sensorpatrone der Fig. 1 ;
- Fig. 4: eine perspektivische Darstellung der im Inneren der Sensorpatrone angeordneten Elemente;
- Fig. 5: die in Fig. 4 gezeigten Elemente, eingesetzt in ein Unterteil eines Kunststoffträgers der Sensorpatrone der Fig. 1 ;
- Fig. 6: eine perspektivische Längsschnittansicht einer weiteren Ausführungsform einer Sensorpatrone gemäß der vorliegenden Erfindung; und
- Fig. 7: eine perspektivische Darstellung einer Anordnung aus einem Hall-Sensor und einer Messschaltungsleiterplatte gemäß einer alternativen Ausführungsform der Erfindung.

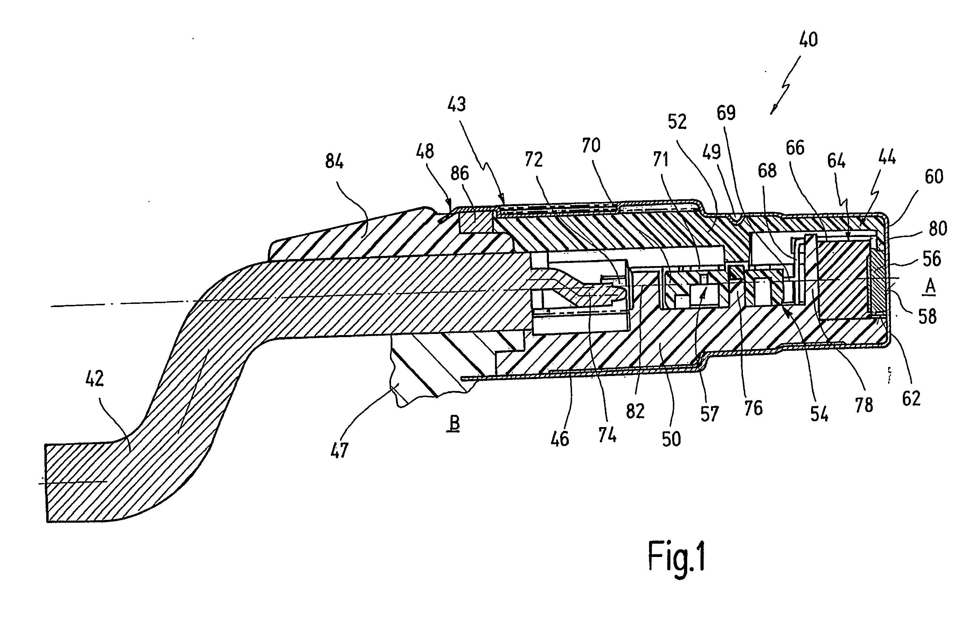

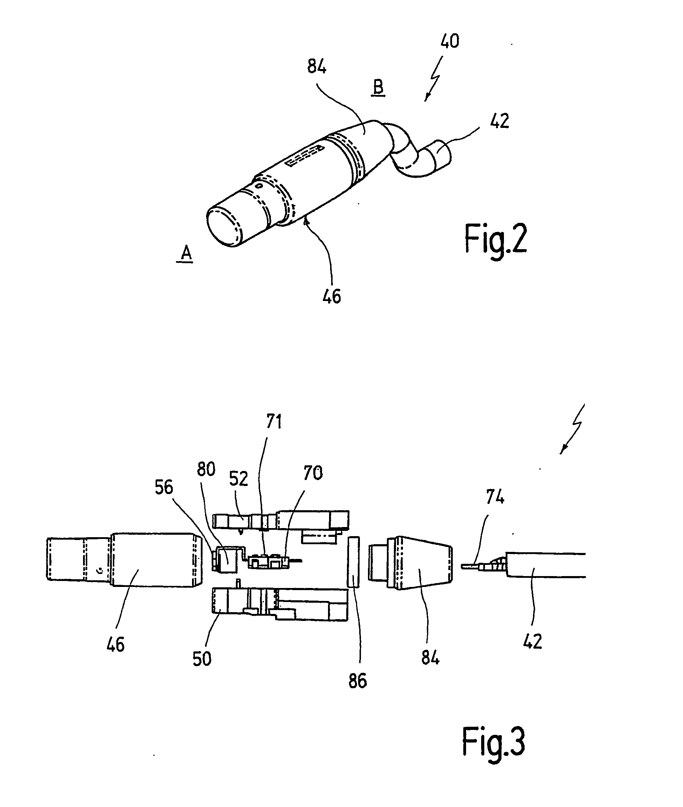

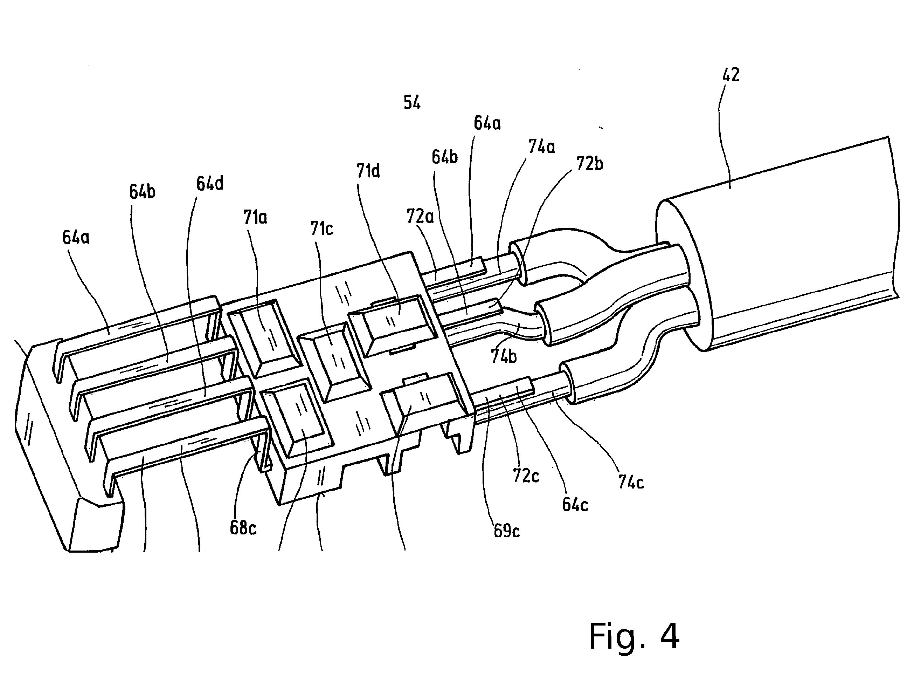

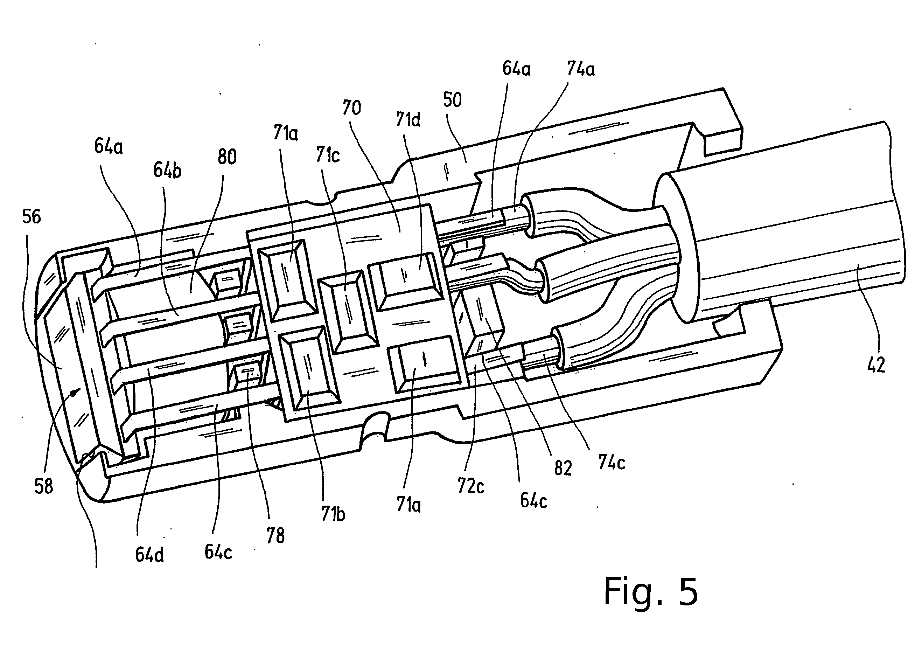

In den Fig. 1 - 5 ist eine Sensorpatrone gemäß einer bevorzugten Ausführungsform der Erfindung generell mit 40 bezeichnet.

Die Sensorpatrone 40 ist an ein elektrisches Anschlusskabel 42 angeschlossen und beinhaltet eine Halteeinrichtung 43 für ein Sensorbauteil.

Die Halteeinrichtung 43 beinhaltet einen Kunststoffträger 44 und eine den Kunststoffträger 44 umschließende Metallhülse 46.

Die Metallhülse 46 ist an einem ersten axialen Ende A geschlossen. An dem zweiten axialen Ende B ist das Anschlusskabel 42 in die Metallhülse 46 hineingeführt. Der Kunststoffträger 44 ist in Richtung hin zu dem ersten axialen Ende A in die Metallhülse 46 eingeschoben. An dem zweiten axialen Ende B ist das offene Ende der Metallhülse 46 radial nach innen eingebördelt, was bei 48 gezeigt ist.

Eine zweite radiale Bördelung 49 ist zwischen den zwei axialen Enden A, B vorgesehen und dient zur alternativen bzw. ergänzenden formschlüssigen Festlegung des Kunststoffträgers 44 an der Metallhülse 46.

Die Metallhülse 46 und der Kunststoffträger 44 werden somit vorzugsweise formschlüssig miteinander verbunden, und zwar durch eine oder beide der zwei folgenden Maßnahmen:
- Einbördeln 48 des Metallhülsenrandes, und zwar derart, dass der Kunststoffträger 44 axial gegen den Boden der Metallhülse 46 gedrückt wird;
- radiales Einbördeln 49 der Metallhülse 46 in einem Bereich, der näher an dem Boden der Metallhülse 46 liegt. Dann können etwaige Formschwankungen des Kunststoffes auf Grund von Temperaturunterschieden besser aufgefangen werden.

Alternativ zu der Anordnung, bei der der Metallhülsenrand eingebördelt wird, kann im Bereich des zweiten Endes B eine Umspritzung vorgesehen sein, wie es in Fig. 1 schematisch bei 47 gezeigt ist. Die Umspritzung kann beispielsweise aus einem Kunststöffmaterial hergestellt sein, beispielsweise in Form einer Makromeltumspritzung.

Auch durch diese Maßnahme kann eine Zugentlastung und eine Abdichtung erzielt werden.

Ferner ist es bei der Ausführungsform mit der Umspritzung nicht notwendig, die Metallhülse 46 im Bereich des zweiten Endes B einzubördeln, so dass der Herstellungsaufwand insgesamt verringert ist.

Der Kunststoffträger 44 ist mehrteilig, vorzugsweise zweiteilig ausgebildet. In der bevorzugten dargestellten Ausführungsform weist der Kunststoffträger 44 ein Unterteil 50 und einen Deckel 52 auf. Das Unterteil 50 und der Deckel 52 sind durch eine etwa axial verlaufende Trennebene voneinander getrennt.

In dem Kunststoffträger 44 ist eine Sensoreinheit 54 aufgenommen. Genauer gesagt, ist die Sensoreinheit in das Unterteil 50 eingesetzt.

Die Sensoreinheit 54 beinhaltet einen Hall-Sensor 56 und eine Messschaltung 57.

Der Hall-Sensor 56 ist im Bereich des ersten Endes A in dem Kunststoffträger 44 gelagert. Der Kunststoffträger 44 weist im Bereich des axialen Endes A eine axiale Öffnung 62 auf, die zu dem Boden 60 der Metallhülse 46 hinweist. Der Hall-Sensor 56 ist innerhalb des Kunststoffträgers 44 axial beweglich bzw. schwimmend gelagert und weist eine Sensorfläche 58 auf. Der Hall-Sensor 56 ist derart in dem Kunststoffträger 44 gelagert, dass die Sensorfläche 58 gegenüber der Öffnung 62 vorsteht und den Boden 60 der Metallhülse 46 berührt.

Der Hall-Sensor 56 weist eine Mehrzahl von Anschlussstiften 64 auf. Die Anschlussstifte erstrecken sich aus dem Gehäuse des Hall-Sensors 56 zunächst in radialer Richtung und gehen dann unmittelbar in einen axialen Abschnitt 66 über. An den axialen Abschnitt 66 schließt sich ein radialer Abschnitt 68 an. An den radialen Abschnitt 68 schließt sich wiederum ein zweiter axialer Abschnitt 69 an, der gegenüber dem ersten axialen Abschnitt 66 parallel versetzt ist.

Der zweite axiale Abschnitt 69 ist mit einem Stifthalter 70 aus Kunststoff umspritzt.

Der Stifthalter 70 ist mit einer Mehrzahl von nicht näher bezeichneten Ausnehmungen versehen, an denen die Anschlussstifte 64 freigelegt sind. In diese Ausnehmungen sind SMD-Bauelemente 71 eingesetzt, die die Messschaltung 57 bilden. Somit wird die Messschaltung 57 unmittelbar an den Anschlussstiften 64 des Hall-Sensors 56 implementiert.

Beispielsweise können Varistor-Elemente (z.B. als SMD-Bauelemente) mit ihren zwei Kontakten an einen Spannungsversorgungsstift einerseits und einen Massestift andererseits gelötet werden.

Ferner kann vorgesehen werden, dass für eine serielle Einbindung von Bauteilen der Messschaltung 57 die von dem Stifthalter 70 umspritzten Anschlussstifte 64 im Bereich einer Aufnahme bzw. Ausnehmung aufgetrennt werden. Ein dann in diese Ausnehmung eingesetztes Bauteil (beispielsweise ein Ferritbauteil) kann dann seriell angeschlossen werden.

Enden 72 der Anschlussstifte 64 stehen gegenüber dem Stifthalter 70 in axialer Richtung vor, so dass sie von Adern 74 des Anschlusskabels 42 kontaktiert werden können.

An dem Kunststoffträger 44, genauer gesagt an dem Unterteil 50, ist ein erster Radialsteg 76 ausgebildet. Der erste Radialsteg 76 greift in eine an der Unterseite des Stifthalters 70 vorgesehene Ausnehmung. Hierdurch wird der Stifthalter 70 in axialer Richtung an dem Kunststoffträger 44 festgelegt.

Ferner weist der Kunststoffträger 44, genauer das Unterteil 50, einen zweiten Radialsteg 78 auf, der näher an dem ersten Ende A liegt. Der zweite Radialsteg 78 verläuft etwa parallel zu dem radialen Abschnitt 68 der Anschlussstifte 64 und dient zur axialen Abstützung eines Silikonkissens 80. Das Silikonkissen 80 ist dabei zwischen den zweiten Radialsteg 78 und den Hall-Sensor 56 eingesetzt. Das Silikonkissen 80 ist so dimensioniert, dass der Hall-Sensor 56 in axialer Richtung hin zu dem ersten Ende A elastisch vorgespannt ist. Hierdurch ist es möglich, dass die Sensorfläche 58 auf Grund der elastischen Vorspannung sicher und unabhängig von Toleranzen des Kunststoffträgers 44 - den Boden 60 der Metallhülse 46 kontaktiert.

Durch die elastische Vorspannung mittels des Silikonkissens 80 wird eine sichere Anlage der Sensorfläche 58 an dem Boden 60 gewährleistet. Ein Verkleben zwischen der Metallhülse 46 und dem Hall-Sensor 56 ist demzufolge nicht notwendig.

Ferner versteht sich, dass anstelle eines Silikonkissens 80 andere beliebige Mittel zur Bereitstellung einer elastischen Vorspannung vorgesehen werden können.

Obgleich ein Verkleben zwischen der Metallhülse 46 und dem Hall-Sensor 56 generell nicht notwendig ist, so wird eine solche Verklebung dennoch vorzugsweise vorgenommen. Hierdurch können Temperaturdrifts vermieden werden. Außerdem ergibt sich eine höhere Vibrationssicherheit bzw. Verlässlichkeit bei auftretenden Vibrationen.

Die elastische Vorspannung kann dabei dazu genutzt werden, um die Sensorfläche 58 bei dem Verklebevorgang fest an den Boden 60 anzudrücken.

Ferner ist an dem Kunststoffträger 44, genauer an dem Unterteil 50, ein dritter Radialsteg 82 vorgesehen, der näher zu dem zweiten Ende B angeordnet ist. Der dritte Radialsteg 82 ist mit (nicht dargestellten) Öffnungen versehen, durch die hindurch sich die Enden 72 der Anschlussstifte 64 hindurch erstrecken. Die gegenüber dem dritten Radialsteg 82 vorstehenden Enden 72 können dann von den Adern 74 kontaktiert werden.

Der dritte Radialsteg 83 dient somit gleichfalls zur Zugentlastung und ist zu diesem Zweck zwischen dem Stifthalter 70 und den Adern 74 angeordnet.

Das Anschlusskabel 42 ist im Bereich des zweiten axialen Endes B durch einen Dichtungsring 84 hindurchgeführt, der sich teilweise in die Metallhülse 46 hinein erstreckt. Ferner ist im Bereich des zweiten axialen Endes B innerhalb der Metallhülse 46 ein Bördelstützring 86 vorgesehen, der aus einem etwas elastischen Material hergestellt sein kann. Der Bördelstützring 86 dient zum Schutz des Kunststoffträgers 44 während des Vorganges des Einbördelns an dem zweiten axialen Ende B (bei 48 gezeigt). Die Einbördelung 48 greift dabei gleichzeitig in den elastischen Dichtungsring 84 hinein und legt auch diesen folglich formschlüssig an der Metallhülse 46 fest.

Während des Bördelvorganges stützen sich die Bördelkräfte axial somit an dem Bördelstützring 86 ab, der wiederum axial in Richtung A gegen den Kunststoffträger 44 drückt.

Durch den Dichtungsring 84 wird das Innere der Metallhülse 46 gegenüber Feuchtigkeit und Ähnlichem geschützt.

Wie bereits oben erwähnt, ist ein Dichtungsring 84 in der Regel nicht notwendig, wenn das zweite Ende B des Sensorhalters 40 umspritzt wird, wie es in Fig. 1 bei 47 dargestellt ist. Auch ein Bördelstützring 86 ist in diesem Fall nicht erforderlich.

Ein besonders bevorzugtes Herstellungsverfahren zum Herstellen der Sensorpatrone 40 sieht demgemäß folgende Schritte vor:
- Bereitstellen eines Hall-Sensors 56 mit mehreren Anschlusspins 64
- Biegen (insbesondere Z-förmig) der Anschlusspins 64
- Umspritzen der Anschlusspins 64 mit einem Stifthalter 70
- gegebenenfalls Ausstanzen von Abschnitten der Anschlusspins 64 im Bereich von Aufnahmen des Stifthalters 70
- Aufbringen von Lötpaste auf die Anschlusspins 64 im Bereich der Aufnahmen bzw. Öffnungen
- Bestücken der Anordnung mit elektrischen Bauteilen 71 (z.B. SMD-Bauteile)
- elektrisches Kontaktieren der Bauteile 71 mit den Anschlusspins 64, beispielsweise durch eine SMG-Verbindungstechnik (Löten), insbesondere mit Heißluft
- Kontaktieren der gegenüber dem Stifthalter 70 vorstehenden Enden 72 der Anschlusspins 64 mit Adern 74 einer Anschlussleitung 42 (beispielsweise durch Formschweißen)
- Einsetzen der so gebildeten Sensoreinheit 54 in ein Unterteil 50 eines Kunststoffträgers 44, gegebenenfalls gemeinsam mit einem Silikonkissen 80 zur Ausübung eines axialen Druckes auf den Hall-Sensor 56
- Aufsetzen eines Deckels 52 auf das Unterteil 50 des Kunststoffträgers 44
- Einführen des Kunststoffträgers 44 in eine Metallhülse 46
- Einbördeln 48 des offenen Endes der Metallhülse 46, wobei auf den Kunststoffträger 44 vorzugsweise ein axialer Druck ausgeübt wird in Richtung hin zum Boden 60 der Metallhülse 46.

Anstelle des Einbördelschrittes kann auch eine Umspritzung des zweiten Endes B erfolgen.

Anstelle des Bereitstellens eines Hall-Sensors 56 mit mehreren Anschlusspins 64 kann auch ein Hall-Sensor in Form eines SMD-Bauteils bereitgestellt werden. In diesem Fall kann eine Verbindung mit Adern einer Anschlussleitung beispielsweise über eine flexible Verbindungseinrichtung, wie eine Flexline oder eine Starflex-Leitung, realisiert werden. Eine Messschaltung kann separat vorgesehen sein oder direkt an der flexiblen Verbindungseinrichtung implementiert sein.

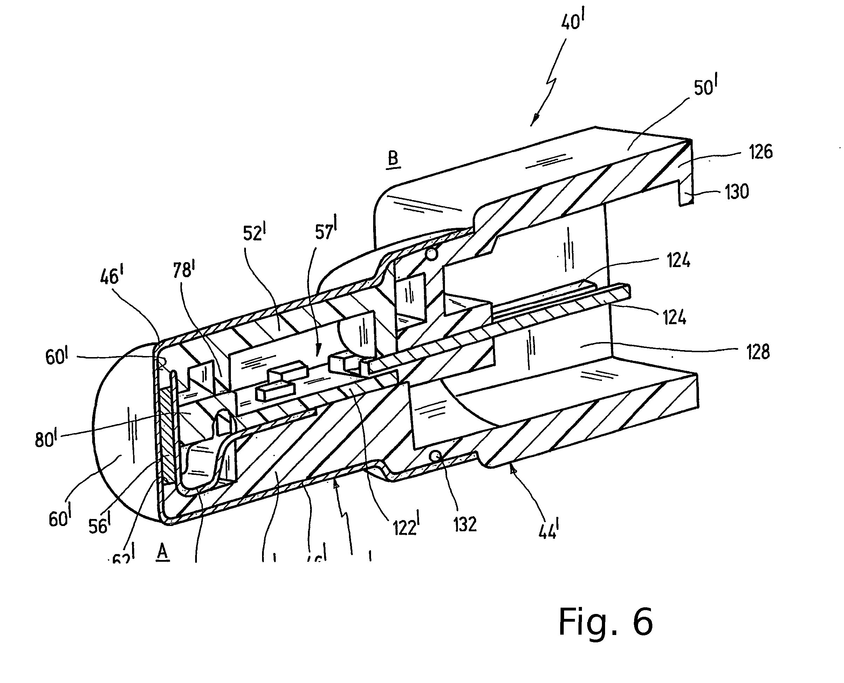

Ein Sensorhalter gemäß einer derartigen alternativen Ausführungsform der Erfindung ist in Fig. 6 generell bei 40' gezeigt.

Der Sensorhalter 40' entspricht in seinem generellen Aufbau und seiner generellen Funktion dem Sensorhalter 40 der Fig. 1 bis 5. Im Folgenden werden lediglich Unterschiede erläutert.

Bei dem Sensorhalter 40' ist ein Sensorbauteil in Form eines Hall-Sensors 56' als SMD-Bauteil ausgebildet. Eine nicht näher bezeichnete Sensorfläche des Hall-Sensors 56' ist an den Boden 60' einer Metallhülse 46' angedrückt, insbesondere verklebt.

An der gegenüberliegenden Fläche des Hall-Sensors 56 sind Anschlusspads vorgesehen, die auf eine flexible flache Verbindungseinrichtung 120 in Form einer sog. Flexfolie kontaktiert sind.

Die Flexfolie 120 ist innerhalb des Kunststoffträgers 44' im Bereich des Hall-Sensors 56' radial ausgerichtet. An diesen radialen Abschnitt schließt sich ein axialer Abschnitt an. Hieran wieder ein radialer Abschnitt und schließlich nochmals ein axialer Abschnitt. Der axiale Abschnitt ist mit einer Leiterplatte 122 elektrisch verbunden, die axial ausgerichtet innerhalb des Kunststoffträgers 44' gelagert ist.

Die Anordnung aus Hall-Sensor 56', Flexfolie 120 und Leiterplatte 122 kann vormontiert sein. An der Leiterplatte 122 kann zumindest ein Teil einer Messschaltung 57' implementiert sein.

An dem dem Boden 60' gegenüberliegenden Ende der Leiterplatte 122 ist eine Mehrzahl von Kontaktstiften 124 angebracht, die sich in axialer Richtung in Richtung hin zu dem zweiten Ende B erstrecken.

Der Kunststoffträger 44' ist zweiteilig ausgebildet, mit einem Unterteil 50' und einem Deckel 52.

Das Unterteil 50' weist einen sich über das zweite Ende B hinaus erstreckenden Ansatz 126 auf. Der Ansatz 126 erstreckt sich aus der Metallhülse 46' heraus und bildet einen Hohlraum 128 aus, in den hinein sich die Kontaktstifte 124 erstrecken.

Der Hohlraum 128 ist als Steckverbinderaufnahme zum Einführen eines - nicht dargestellten - Steckverbinders ausgelegt. Der Steckverbinder selbst kann dabei mit den Adern des Anschlusskabels verbunden sein.

An dem Ansatz 126 ist ferner ein Raststeg 130 ausgebildet, der dazu ausgelegt ist, den Steckverbinder rastend in dem Hohlraum 128 aufzunehmen. Anstelle des Raststegs 130 kann natürlich auch eine entsprechende Rastvertiefung vorgesehen sein.

Der nicht dargestellte Steckverbinder weist Verbindungsbuchsen zur Aufnahme der Kontaktstifte 124 auf, um so die Adern des Anschlusskabels mit der Leiterplatte 122 und damit auch mit dem Hall-Sensor 56' zu verbinden.

In dem Bereich zwischen der Leiterplatte 122 und dem Hall-Sensor 56' ist an dem Kunststoffträger 44' ein Radialsteg 78' ausgebildet, der eine Öffnung aufweist, in die hinein ein Silikonkissen 80' eingesetzt ist, um dieses an dem Kunststoffträger 44', insbesondere an dem Deckel 52', zu lagern.

Schließlich ist an dem Kunststoffträger 44' außenumfänglich eine Ausnehmung zur Aufnahme eines O-Rings 132 ausgebildet, mittels dessen die Metallhülse 46' gegenüber dem Kunststoffträger 44' abgedichtet ist.

Der O-Ring ist bei der dargestellten Ausführungsform an einem Abschnitt des Unterteils 50' ausgebildet, der innerhalb der Metallhülse 46' angeordnet ist und einen Übergang zwischen dem Deckel 52' und dem Ansatz 126 bildet.

Schließlich lässt sich der Gedanke eines Verbundbauteiles aus einem Kunststoffträger und einer Metallhülse auch auf ein Bauteil anwenden, mit dem ein Permanentmagnet innerhalb einer Sensoranordnung gelagert wird.

Hierbei wird der Magnet beispielsweise rastend oder sonst wie elastisch an einen Kunststoffträger eingesetzt bzw. eingeclipst. Anschließend wird die Metallhülse darüber geschoben, so dass der Permanentmagnet im Bereich des Bodens der Metallhülse liegt. Anschließend erfolgt wiederum ein Bördelvorgang, so dass der Permanentmagnet in axialer Richtung gegen die Innenseite des Bodens der Hülse angedrückt wird.

Obgleich bei der oben beschriebenen bevorzugten Ausführungsform generell von einer axial beweglichen Lagerung des Hall-Sensors 56 an dem Kunststoffträger 44 ausgegangen wird, ist es auch möglich, den Hall-Sensor unbeweglich an den Kunststoffträger festzulegen. In diesem Fall kann das Andrücken des vorstehenden Hall-Sensors an den Boden der Metallhülse 46 beispielsweise durch die Bördelkraft erfolgen.

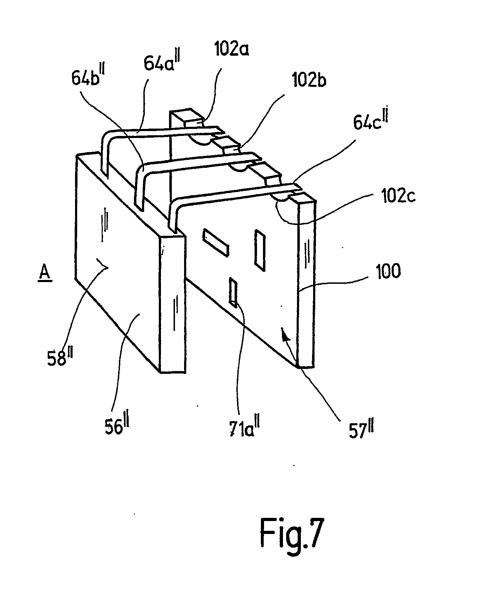

In Fig. 7 ist eine alternative Ausführungsform einer erfindungsgemäßen Anordnung aus einem Hall-Sensor 56'' und einer Messschaltung 57'' gezeigt.

Dabei wird davon ausgegangen, dass der Hall-Sensor 56" generell in einer vertikalen Ausrichtung an einem beliebigen Träger gelagert ist, derart, dass seine Sensorfläche 58' hin zu einem axialen Ende A weist.

Die Anschlussstifte 64'' treten in radialer Richtung aus dem Gehäuse des Hall-Sensors 56" heraus und sind in der Folge in axialer Richtung abgebogen.

Die Messschaltung 57" ist an einer separat vorgesehenen Leiterplatte 100 ausgebildet.

Die Leiterplatte 100 ist etwa parallel zu dem Hall-Sensor 56" ausgerichtet und erstreckt sich folglich in radialer Richtung. An einer Kante der Leiterplatte 100 sind eine Mehrzahl von Vertiefungen, insbesondere halbkreisförmigen Vertiefungen 102, ausgebildet. Die Anschlussstifte 64" sind in die Vertiefungen 102 eingeführt und dort elektrisch kontaktiert, beispielsweise durch Löten.

Die Leiterplatte 100 lässt sich beispielsweise herstellen aus einer Grundleiterplatte, die z.B. die Abmessungen von zwei Leiterplatten 100 besitzt und an einer Trenngrenze mit kreisförmigen Durchkontaktierungen versehen ist. Durch Auftrennen der Grundleiterplatte entlang dieser Trenngrenze entstehen die in Fig. 7 dargestellten halbkreisförmigen, metallisch platierten Vertiefungen 102, die zur Aufnahme und elektrischen Kontaktierung der Anschlussstifte 64'' geeignet sind.

Es versteht sich jedoch, dass die Leiterplatte 100 ggf. auch kreisförmige Durchkontaktierungen aufweisen kann, in die die Anschlussstifte 64" in an sich herkömmlicher Weise eingeführt werden.

## Patentansprüche

1. Sensorhalter (40) zum Lagern eines Sensorbauteiles (56), insbesondere eines Hall-Sensors (56), mit einer länglichen Halteeinrichtung (43), an deren erstem axialen Ende (A) das Sensorbauteil (56) gelagert ist und an deren zweitem axialen Ende (B) ein Anschlusskabel (42) heranführbar ist, dessen Adern (74) mit Anschlüssen (64) des Sensorbauteiles (56) verbindbar sind, wobei die Halteeinrichtung (43) einen Kunststoffträger (44), an dem das Sensorbauteil (56) gelagert ist, und eine den Kunststoffträger (44) umschließende Metallhülse (46) aufweist, die an dem ersten Ende (A) geschlossen ist, **dadurch gekennzeichnet, dass** das Sensorbauteil (56) in axialer Richtung schwimmend an dem Kunststoffträger (44) gelagert ist, wobei elastische Mittel (80) zwischen einem Radialsteg (78) des Kunststoffträgers (44) und dem Sensorbauteil (56) vorgesehen sind, um das Sensorbauteil (56) in axialer Richtung hin zu dem ersten Ende (A) vorzuspannen, und wobei sich die elastischen Mittel (80) in axialer Richtung an dem Radialsteg (78) abstützen.

2. Sensorhalter nach Anspruch 1, **dadurch gekennzeichnet, dass** die Metallhülse (46) mit einer Bördelung (48) versehen ist, um den Kunststoffträger (44) an der Metallhülse (46) festzulegen.

3. Sensorhalter nach einem der Ansprüche 1 bis 2, **dadurch gekennzeichnet, dass** das Anschlusskabel (42) am zweiten Ende (B) des metallischen Außenträgers (46) umspritzt ist.

4. Sensorhalter nach einem der Ansprüche 1 bis 3, **dadurch gekennzeichnet, dass** der Kunststoffträger (44) ein Unterteil (50) und einen Deckel (52) aufweist, die durch eine etwa axial verlaufende Trennebene voneinander getrennt sind.

5. Sensorhalter nach einem der Ansprüche 1 bis 4, **dadurch gekennzeichnet, dass** an dem Kunststoffträger (44) ein erster Radialsteg (76; 130) zur Zugentlastung ausgebildet ist.

6. Sensorhalter nach einem der Ansprüche 1 bis 5, **dadurch gekennzeichnet, dass** die elastischen Mittel (80) durch ein Silikonkissen (80) gebildet sind.

7. Sensorhalter nach einem der Ansprüche 1 bis 6, **dadurch gekennzeichnet, dass** der Kunststoffträger (44) an dem ersten Ende (A) eine Öffnung (62) aufweist, gegenüber der eine Sensorfläche (58) des Sensorbauteiles (56) axial vorsteht.

8. Sensorhalter nach einem der Ansprüche 1 bis 7, **dadurch gekennzeichnet, dass** wenigstens ein Anschlussstift (64) des Sensorbauteiles (56) mit einem Stifthalter (70) aus Kunststoff umspritzt ist.

9. Sensorhalter nach Anspruch 8, **dadurch gekennzeichnet, dass** der Stifthalter (70) wenigstens eine Ausnehmung aufweist, in der wenigstens ein Anschlussstift (64) freigelegt ist.

10. Sensorhalter nach Anspruch 9, **dadurch gekennzeichnet, dass** ein elektrisches Bauteil (71) in die Ausnehmung eingesetzt ist und den Anschlussstift (64) kontaktiert.

11. Sensorhalter nach einem der Ansprüche 8 bis 10 **dadurch gekennzeichnet, dass** Enden der Anschlussstifte (64) gegenüber dem Stifthalter (70) vorstehen und mit den Adern (74) des Anschlusskabels (42) elektrisch verbindbar sind.

12. Sensorhalter nach einem der Ansprüche 8 bis 11, **dadurch gekennzeichnet, dass** der Stifthalter (70) eine Vertiefung aufweist, in die ein Radialsteg (76) der Halteeinrichtung (43), insbesondere des Kunststoffträgers (44), greift, um eine Zugentlastung bereitzustellen.

13. Sensorhalter nach einem der Ansprüche 1 bis 12, **dadurch gekennzeichnet, dass** das Anschlusskabel mit einem Steckverbinder verbunden ist und dass der Kunststoffträger (44') eine Steckverbinderaufnahme (128) zum Einführen des Steckverbinders aufweist.

14. Sensorhalter nach einem der Ansprüche 1 bis 13, **dadurch gekennzeichnet**, das zur elektrischen Verbindung zwischen dem Sensorbauteil (56') und einer Messschaltung (57') eine flexible flache Verbindungseinrichtung vorgesehen ist.

15. Sensorhalter nach einem der Ansprüche 1 bis 14, **dadurch gekennzeichnet, dass** an dem Kunststoffträger (44') eine Leiterplatte (100; 122) gelagert ist, an der zumindest ein Teil einer Messschaltung (57) implementiert ist.

16. Verfahren zum Herstellen einer Sensorpatrone (40) für eine Sensoranordnung (10), mit den Schritten:
a) Bereitstellen eines Sensorbauteiles (56);
b) Verbinden von Anschlüssen (64) des Sensorbauteiles (56) mit Adern (74) eines Anschlusskabels (42);
c) Einsetzen des Sensorbauteiles (56) in einen Kunststoffträger (44), wobei das Sensorbauteil (56) in axialer Richtung schwimmend an dem Kunststoffträger (44) gelagert wird, derart, dass das Sensorbauteil (56) durch elastische Mittel (80) zwischen einem Radialsteg (78) des Kunststoffträgers (44) und dem Sensorbauteil (56) in axialer Richtung hin zu einem ersten Ende (A) vorgespannt wird, wobei sich die elastischen Mittel (80) in axialer Richtung an dem Radialsteg (78) abstützen, und
d) Umschließen des Kunststoffträgers (44) mit einer Metallhülse (46).

17. Verfahren nach Anspruch 16, wobei Anschlussstifte (64) des Sensorbauteiles (56) vor dem Schritt b) mit einem Stifthalter (70) aus Kunststoff umspritzt werden.

18. Verfahren nach Anspruch 17, wobei der Stifthalter (70) wenigstens eine Ausnehmung aufweist, in der wenigstens ein Anschlussstift (64) freigelegt ist, und wobei ein elektrisches Bauteil (71), insbesondere ein SMD-Bauteil (71), in die Ausnehmung eingesetzt und elektrisch mit dem Anschlussstift (64) verbunden wird.

19. Verfahren nach Anspruch 16, wobei das Sensorbauteil (56') mittels einer flachen flexiblen Verbindungseinrichtung (120) mit einer Messschaltung (57') im Inneren des Kunststoffträgers (44') verbunden wird.

## Claims

1. Sensor holder (40) for mounting a sensor component (56), in particular a Hall sensor (56), with an elongate holding device (43), at the first axial end (A) of which the sensor component (56) is mounted and at the second axial end (B) of which a junction cable (42) can be led up, the conductors (74) of which can be connected to terminals (64) of the sensor component (56), wherein the holding device (43) has a plastic carrier (44), on which the sensor component (56) is mounted, and a metal sleeve (46), surrounding the plastic carrier (44), which metal sleeve (46) is closed at the first end (A), **characterized in that** the sensor component (56) is mounted floatingly in the axial direction on the plastic carrier (44), wherein elastic means (80) are provided between a radial web (78) of the plastic carrier (44) and the sensor component (56) in order to prestress the sensor component (56) in the axial direction toward the first end (A), and wherein the elastic means (80) are supported in the axial direction on the radial web (78).

2. Sensor holder according to Claim 1, **characterized in that** the metal sleeve (46) is provided with a flanging (48), in order to secure the plastic carrier (44) to the metal sleeve (46).

3. Sensor holder according to one of Claims 1 to 2, **characterized in that** the junction cable (42) is injection-molded around at the second end (B) of the metallic outer carrier (46).

4. Sensor holder according to one of Claims 1 to 3, **characterized in that** the plastic carrier (44) has a lower part (50) and a cover (52) which are separated from one another by means of an approximately axially running parting plane.

5. Sensor holder according to one of Claims 1 to 4, **characterized in that** a first radial web (76; 130) for tensile relief is formed on the plastic carrier (44).

6. Sensor holder according to one of Claims 1 to 5, **characterized in that** the elastic means (80) are formed by a silicone cushion (80).

7. Sensor holder according to one of Claims 1 to 6, **characterized in that** the plastic carrier (44) has at the first end (A) an orifice (62) with respect to which a sensor face (58) of the sensor component (56) projects axially.

8. Sensor holder according to one of Claims 1 to 7, **characterized in that** at least one terminal pin (64) of the sensor component (56) is injection-molded around with a pin holder (70) consisting of plastic.

9. Sensor holder according to Claim 8, **characterized in that** the pin holder (70) has at least one recess in which at least one terminal pin (64) is exposed.

10. Sensor holder according to Claim 9, **characterized in that** an electrical component (71) is inserted into the recess and contacts the terminal pin (64).

11. Sensor holder according to one of Claims 8 to 10, **characterized in that** ends of the terminal pins (64) project with respect to the pin holder (70) and can be connected electrically to the conductors (74) of the junction cable (42).

12. Sensor holder according to one of Claims 8 to 11, **characterized in that** the pin holder (70) has a depression, into which a radial web (76) of the holding device (43), in particular of the plastic carrier (44), engages, in order to provide tensile relief.

13. Sensor holder according to one of Claims 1 to 12, **characterized in that** the junction cable is connected to a plug connector, and **in that** the plastic carrier (44') has a plug connector receptacle (128) for the introduction of the plug connector.

14. Sensor holder according to one of Claims 1 to 13, **characterized in that** a flexible flat connection device is provided for electrical connection between the sensor component (56') and a measuring circuit (57').

15. Sensor holder according to one of Claims 1 to 14, **characterized in that** the plastic carrier (44') has mounted on it a circuit board (100; 122) on which at least part of a measuring circuit (57) is implemented.

16. Method for the production of a sensor cartridge (40) for a sensor arrangement (10), with the steps:
a) provision of a sensor component (56);
b) connection of terminals (64) of the sensor component (56) to conductors (74) of a junction cable (42);
c) insertion of the sensor component (56) into a plastic carrier (44), wherein the sensor component (56) is mounted floatingly in the axial direction on the plastic carrier (44) in such a way that the sensor component (56) is prestressed in the axial direction toward a first end (A) by elastic means (80) between a radial web (78) of the plastic carrier (44) and the sensor component (56), wherein the elastic means (80) are supported in the axial direction on the radial web (78), and
d) surrounding of the plastic carrier (44) with a metal sleeve (46).

17. Method according to Claim 16, before step b) terminal pins (64) of the sensor component (56) being injection-molded around with a pin holder (70) consisting of plastic.

18. Method according to Claim 17, the pin holder (70) having at least one recess in which at least one terminal pin (64) is exposed, and an electrical component (71), in particular an SMD component (71), being inserted into the recess and being connected electrically to the terminal pin (64).

19. Method according to Claim 16, the sensor component (56') being connected to a measuring circuit (57') inside the plastic carrier (44') by means of a flat flexible connection device (120).

## Revendications

1. Support de capteur (40) pour supporter un composant de capteur (56), en particulier un capteur de Hall (56), comprenant un dispositif de retenue allongé (43), à la première extrémité axiale (A) duquel le composant de capteur (56) est supporté et à la deuxième extrémité axiale (B) duquel un câble de raccordement (42) peut être amené, dont les fils (74) peuvent être connectés à des raccords (64) du composant de capteur (56), le dispositif de retenue (43) présentant un support en plastique (44) sur lequel est supporté le composant de capteur (56) et une douille métallique (46) entourant le support en plastique (44), laquelle est fermée à la première extrémité (A), **caractérisé en ce que** le composant de capteur (56) est supporté dans la direction axiale de manière flottante sur le support en plastique (44), des moyens élastiques (80) étant prévus entre une nervure radiale (78) du support en plastique (44) et le composant de capteur (56), afin de précontraindre le composant de capteur (56) dans la direction axiale jusqu'à la première extrémité (A), et les moyens élastiques (80) s'appuyant dans la direction axiale contre la nervure radiale (78).

2. Support de capteur selon la revendication 1, **caractérisé en ce que** la douille métallique (46) est pourvue d'une bordure (48) afin de fixer le support en plastique (44) contre la douille métallique (46).

3. Support de capteur selon l'une quelconque des revendications 1 à 2, **caractérisé en ce que** le câble de raccordement (42) est surmoulé sur la deuxième extrémité (B) du support extérieur métallique (46).

4. Support de capteur selon l'une quelconque des revendications 1 à 3, **caractérisé en ce que** le support en plastique (44) présente une partie inférieure (50) et un couvercle (52), qui sont séparés l'un de l'autre par un plan de séparation s'étendant approximativement axialement.

5. Support de capteur selon l'une quelconque des revendications 1 à 4, **caractérisé en ce qu'**une première nervure radiale (76 ; 130) pour la détente de traction est réalisée sur le support en plastique (44).

6. Support de capteur selon l'une quelconque des revendications 1 à 5, **caractérisé en ce que** les moyens élastiques (80) sont formés par un coussin en silicone (80).

7. Support de capteur selon l'une quelconque des revendications 1 à 6, **caractérisé en ce que** le support en plastique (44) présente sur la première extrémité (A) une ouverture (62) en face de laquelle fait saillie axialement une surface de capteur (58) du composant de capteur (56).

8. Support de capteur selon l'une quelconque des revendications 1 à 7, **caractérisé en ce qu'**au moins une broche de raccordement (64) du composant de capteur (56) est surmoulée avec un support de broche (70) en plastique.

9. Support de capteur selon la revendication 8, **caractérisé en ce que** le support de broche (70) présente au moins un évidement dans lequel est exposée au moins une broche de raccordement (64).

10. Support de capteur selon la revendication 9, **caractérisé en ce qu'**un composant électrique (71) est inséré dans l'évidement et vient en contact avec la broche de raccordement (64).

11. Support de capteur selon l'une quelconque des revendications 8 à 10, **caractérisé en ce que** des extrémités des broches de raccordement (64) font saillie en face du support de broche (70) et peuvent être connectées électriquement aux fils (74) du câble de raccordement (42).

12. Support de capteur selon l'une quelconque des revendications 8 à 11, **caractérisé en ce que** le support de broche (70) présente un renfoncement dans lequel une nervure radiale (76) du dispositif de retenue (43), en particulier du support en plastique (44), vient en prise, afin de fournir une détente de traction.

13. Support de capteur selon l'une quelconque des revendications 1 à 12, **caractérisé en ce que** le câble de raccordement est connecté à un connecteur enfichable et **en ce que** le support en plastique (44') présente un logement de connecteur enfichable (128) pour l'insertion du connecteur enfichable.

14. Support de capteur selon l'une quelconque des revendications 1 à 13, **caractérisé en ce que** pour la connexion électrique entre le composant de capteur (56') et un circuit de mesure (57') est prévu un dispositif de liaison plat flexible.

15. Support de capteur selon l'une quelconque des revendications 1 à 14, **caractérisé en ce qu'**une carte à circuits imprimés (100 ; 122) est montée sur le support en plastique (44'), sur laquelle est mise en oeuvre au moins une partie d'un circuit de mesure (57).

16. Procédé de fabrication d'une cartouche de capteur (40) pour un agencement de capteur (10), comprenant les étapes suivantes :
a) fourniture d'un composant de capteur (56) ;
b) connexion de raccords (64) du composant de capteur (56) à des fils (74) d'un câble de raccordement (42) ;
c) insertion du composant de capteur (56) dans un support en plastique (44), le composant de capteur (56) étant monté dans la direction axiale de manière flottante sur le support en plastique (44), de telle sorte que le composant de capteur (56) soit précontraint dans la direction axiale vers une première extrémité (A) par des moyens élastiques (80) entre une nervure radiale (78) du support en plastique (44) et le composant de capteur (56), les moyens élastiques (80) s'appuyant dans la direction axiale contre la nervure radiale (78) et
d) enveloppement du support en plastique (44) par une douille métallique (46).

17. Procédé selon la revendication 16, dans lequel des broches de raccordement (64) du composant de capteur (56) sont surmoulées avant l'étape b) avec un support de broche (70) en plastique.

18. Procédé selon la revendication 17, dans lequel le support de broche (70) présente au moins un évidement dans lequel est exposée au moins une broche de raccordement (64), et dans lequel un composant électrique (71), en particulier un composant monté en surface (71), est inséré dans l'évidement et est connecté électriquement à la broche de raccordement (64).

19. Procédé selon la revendication 16, dans lequel le composant de capteur (56') est connecté au moyen d'un dispositif de connexion plat flexible (120) à un circuit de mesure (57') à l'intérieur du support en plastique (44').
